# EUROPEAN PATENT APPLICATION

(11) **EP 3 998 178 A1**
(43) Date of publication of application: **18.05.2022**
(21) Application number: 20846302.6
(22) Date of filing: 17.07.2020
(51) Int. Cl.: B60R 16/02

(54) **IN-VEHICLE POWER SUPPLY SYSTEM**

(30) Priority: 30.07.2019 JP 2019139613
(71) Applicant: MAZDA MOTOR CORPORATION, Hiroshima 730-8670 (JP)
(72) Inventor: YAMADA Sadahisa, Aki-gun, Hiroshima 730-8670 (JP); FUJISAKA Kazuichi, Aki-gun, Hiroshima 730-8670 (JP); SHIMIZU Masaaki, Aki-gun, Hiroshima 730-8670 (JP)
(74) Representative: Laufhütte, Dieter
(86) International application number: PCT/JP2020/027864
(87) International publication number: WO 2021/020175

(57) **Abstract**

An in-vehicle power supply system includes first to sixth power supply hubs (11 to 16) connected to a main feed line routed from a battery (2), electronic devices (D11 to D14, D21 to D25, and D31 to D33) connected to the first to sixth power supply hubs (11 to 16), and a relay configured to turn ON or OFF energization of each of the electronic devices. The relay includes a mechanical relay used for an electronic device whose current consumption is higher than or equal to 10 A, and the relay includes a semiconductor relay used for an electronic device whose current consumption is lower than 10 A. The mechanical relay is disposed outside a space of a vehicle cabin and inside a body of a vehicle (1), the space of the vehicle cabin being surrounded by a water seal (S) that blocks entry of water from an outside of the vehicle into the vehicle cabin.

## Description

### Technical Field

The present disclosure relates to an in-vehicle power supply system.

### Background Art

An existing in-vehicle power supply system has a configuration in which many electronic devices are disposed in a vehicle and power is fed to the individual electronic devices via feed lines (see, for example, Japanese Unexamined Patent Application Publication No. 2016-201740 (PTL 1)).

### Citation List

### Patent Literature

PTL 1: Japanese Unexamined Patent Application Publication No. 2016-201740

### Summary of Invention

### Technical Problem

In the above-described in-vehicle power supply system, a fuse, a mechanical relay, or a semiconductor relay is disposed in a power supply path to each electronic device to turn ON or OFF power feeding to each electronic device. However, it is not easy to appropriately select a mechanical relay or a semiconductor relay in accordance with characteristics of each electronic device.

Under circumstances in which the number and types of electronic devices remarkably increase because of driving assistance and automated driving, there is no guideline regarding which of a fuse, a mechanical relay, and a semiconductor relay is to be used as energizing means for electronic devices, and specifications are determined by trial and error at the site of designing.

With the recent spread of electric driving and no idling, a quiet time with no engine noise has been increasing in a scene of using a car. On the other hand, the number of relays has been increasing in proportion to the number of electronic devices, and there is a concern that an operation sound (click sound) of a mechanical relay of an electronic device that is turned ON without an operation by a passenger is more likely to make the passenger uncomfortable.

The present disclosure provides an in-vehicle power supply system in which an operation sound of a mechanical relay is not transmitted to a vehicle cabin and comfort of a user can be increased.

### Solution to Problem

An in-vehicle power supply system of the present disclosure includes:
a plurality of power supply hubs connected to a main feed line routed from a mounted main power supply;
a plurality of electronic devices connected to the plurality of power supply hubs via a sub feed line;
a relay configured to turn ON or OFF energization of each of the electronic devices via the sub feed line; and
a control device configured to control ON and OFF of the relay to control power feeding to each of the electronic devices, in which
each of the plurality of power supply hubs is connected to another of the plurality of power supply hubs by the main feed line,
the relay includes a mechanical relay used for an electronic device whose current consumption is higher than or equal to 10 A among the plurality of electronic devices,
the relay includes a semiconductor relay used for an electronic device whose current consumption is lower than 10 A among the plurality of electronic devices, and
the mechanical relay is disposed outside a space of a vehicle cabin and inside a body of a vehicle, the space of the vehicle cabin being surrounded by a water seal that blocks entry of water from an outside of the vehicle into the vehicle cabin.

According to the above-described configuration, a mechanical relay is used as a relay for an electronic device whose current consumption is higher than or equal to 10 A among the plurality of electronic devices. On the other hand, a semiconductor relay is used as a relay for an electronic device whose current consumption is lower than 10 A among the plurality of electronic devices. The mechanical relay is not disposed in the space of the vehicle cabin surrounded by the water seal. As a result, an operation sound of the mechanical relay is not transmitted to the vehicle cabin, and comfort of a user can be increased.

In an in-vehicle power supply system according to an aspect of the present disclosure,
the relay is accommodated inside each of the power supply hubs, and a power supply hub including the mechanical relay among the power supply hubs is disposed outside the space of the vehicle cabin surrounded by the water seal and inside the body of the vehicle.

### Advantageous Effects of Invention

As is clear from the above, according to the present disclosure, it is possible to implement an in-vehicle power supply system to which a mechanical relay and a semiconductor relay are applied in accordance with characteristics of an electronic device.

### Brief Description of Drawings

[Fig. 1] Fig. 1 is a power supply system diagram of a vehicle related to an in-vehicle power supply system of an embodiment of the present disclosure.
[Fig. 2] Fig. 2 is a signal system diagram of a main part of the vehicle.
[Fig. 3] Fig. 3 is a diagram illustrating a power supply topology of a zone in which a second power supply hub is disposed.

### Description of Embodiments

Hereinafter, an in-vehicle power supply system of the present disclosure will be described in detail with reference to an embodiment illustrated in the drawings. In the drawings, the same reference numerals represent the same or corresponding parts. In the following description, "front", "rear", "right", and "left" mean "front of a vehicle 1", "rear of the vehicle 1", "right of the vehicle 1", and "left of the vehicle 1", respectively. For example, a "front-rear direction" means a "front-rear direction of the vehicle 1".

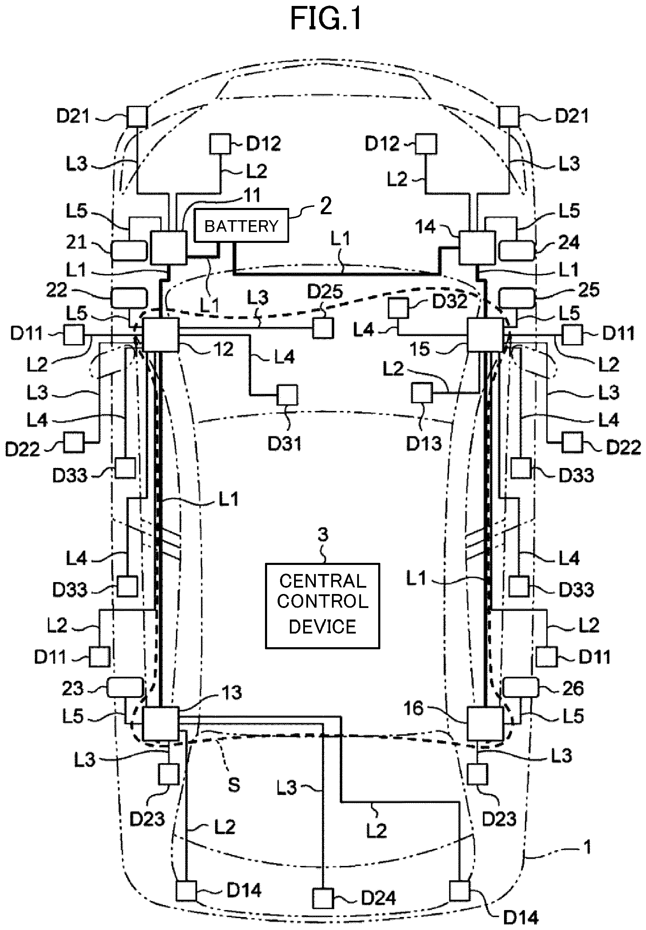

Fig. 1 is a power supply system diagram of the vehicle 1 in which an in-vehicle power supply system of an embodiment of the present disclosure is mounted. The vehicle 1 is a five-door engine car including four side doors and one back door.

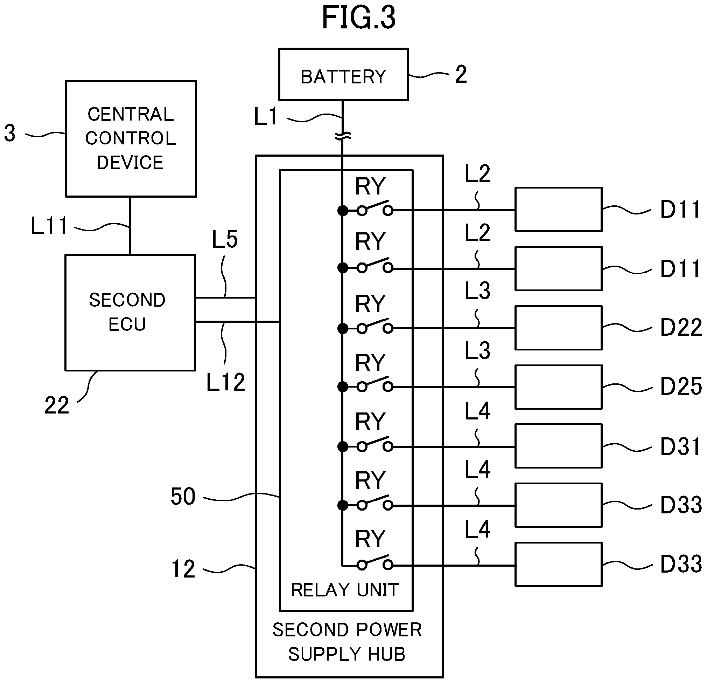

As illustrated in Fig. 1, the vehicle 1 includes first to sixth power supply hubs 11 to 16 electrically connected to a battery 2 via main feed lines L1, a plurality of electronic devices D11 to D14, D21 to D25, and D31 to D33 electrically connected to the first to sixth power supply hubs 11 to 16 via sub feed lines L2 to L5, first to sixth electronic control units (ECUs) 21 to 26 that control ON and OFF of energization of the plurality of electronic devices D11 to D14, D21 to D25, and D31 to D33, and a central control device 3 that controls the first to sixth ECUs 21 to 26. The first to sixth ECUs 21 to 26 are electrically connected to the first to sixth power supply hubs 11 to 16 via the sub feed lines L5 and communication lines L12 (illustrated in Fig. 3). In this way, the first to sixth power supply hubs 11 to 16 are connected to the main feed lines L1 routed from the battery 2 (main power supply) mounted in the vehicle 1.

The first to sixth ECUs 21 to 26 and the central control device 3 correspond to an example of a control device. The first to sixth ECUs 21 to 26 correspond to an example of a sub control device, whereas the central control device 3 corresponds to an example of a main control device.

More specifically, the vehicle 1 includes the plurality of electronic devices D11 to D14, D21 to D25, and D31 to D33 that are operated by power fed from the battery 2. The electronic devices D11 to D14 are electronic devices (first electronic devices) to which power can be constantly fed from the battery 2, and are also referred to as constantly-power-fed electronic devices. On the other hand, the electronic devices D21 to D25 and D31 to D33 are electronic devices (second electronic devices) to which power can be fed from the battery 2 by an operation performed by a passenger of the vehicle 1. The electronic devices D21 to D25 consume less power than the electronic devices D31 to D33, and are also referred to as accessory electronic devices. The electronic devices D31 to D33 consume more power than the electronic devices D21 to D25, and are also referred to as ignition electronic devices.

The electronic devices D11 to D14, which are also referred to as constantly-power-fed electronic devices, are the following, for example: the electronic devices D11 are keyless devices; the electronic devices D12 are monitoring camera devices for theft monitoring; the electronic device D13 is a burglar alarm device; and the electronic devices D14 are brake lights. The keyless devices receive radio waves from a transmitter in a key carried by a passenger.

The electronic devices D21 to D25, which are also referred to as accessory electronic devices, are electronic devices that are assumed to be used regardless of whether ignition of the engine of the vehicle 1 is ON or OFF. For example, the electronic devices D21 are headlights, the electronic devices D22 are electric mirrors, the electronic devices D23 are audio devices, the electronic device D24 is a rear camera device, and the electronic device D25 is a car navigation device. A display of the car navigation device displays an image captured by the rear camera device in accordance with movement of a shift lever to a reverse position. The rear camera device is an example of a camera device.

The electronic devices D31 to D33, which are also referred to as ignition electronic devices, can be used even when ignition of the engine of the vehicle 1 is OFF, but are electronic devices basically assumed to be used when ignition of the engine is ON. For example, the electronic device D31 is an air conditioner, the electronic device D32 is an electric power steering device, and the electronic devices D33 are electric power windows.

The electronic devices D11 to D14, D21 to D25, and D31 to D33 may include a sensor, an actuator, an ECU for controlling the actuator, and the like for operating the devices described above.

In the power supply system of the vehicle 1, the vehicle 1 is divided into six zones, and each zone has any one of the first to sixth power supply hubs 11 to 16. The power supply hubs 11 to 16 described herein have a function of distributing power fed from the battery 2 to the individual electronic devices D11 to D14, D21 to D25, and D31 to D33 by dividing the power for individual power supply systems at positions close to the electronic devices D11 to D14, D21 to D25, and D31 to D33.

The first power supply hub 11 is disposed in a left front zone. The second power supply hub 12 is disposed near a left-front side door zone. The third power supply hub 13 is disposed in a left rear zone. The fourth power supply hub 14 is disposed in a right front zone. The fifth power supply hub 15 is disposed near a right-front side door zone. The sixth power supply hub 16 is disposed in a right rear zone. At the time of increasing or decreasing the number of zones, the number of the first to sixth power supply hubs 11 to 16 increases or decreases in accordance with the increase or decrease in the number of zones.

The battery 2, the main feed line L1, the first to third power supply hubs 11 to 13, and the sub feed lines L2 to L4 form a power supply path. The battery 2, the main feed line L1, the fourth to sixth power supply hubs 14 to 16, and the sub feed lines L2 to L4 form a power supply path. Although not illustrated, a fuse based on a current carrying capacity is disposed in the power supply paths as necessary.

The first to sixth power supply hubs 11 to 16 are disposed in the power supply paths between the battery 2 and the electronic devices D11 to D14, D21 to D25, and D31 to D33. To be more specific, the first power supply hub 11 is disposed in the power supply path between the battery 2 and the electronic devices D12 and D21 in the left front zone. The second power supply hub 12 is disposed in the power supply path between the battery 2 and the electronic devices D11, D22, and D33 in or near the left side door zone and between the battery 2 and the electronic device D25 on the center side. The third power supply hub 13 is disposed in the power supply path between the battery 2 and the electronic devices D14 and D23 in the left rear zone, between the battery 2 and the electronic device D14 on the right rear side, and between the battery 2 and the electronic device D24 on the rear side. The fourth power supply hub 14 is disposed in the power supply path between the battery 2 and the electronic devices D12 and D21 in the right front zone. The fifth power supply hub 15 is disposed in the power supply path between the battery 2 and the electronic devices D11, D22, and D33 in or near the right-front side door zone. The sixth power supply hub 16 is disposed in the power supply path between the battery 2 and the electronic device D23 in the right rear zone.

The first to sixth power supply hubs 11 to 16 are each connected to the battery 2 or another of the first to sixth power supply hubs 11 to 16 in the vicinity thereof by the main feed line L1. To be more specific, the first power supply hub 11 and the fourth power supply hub 14 are each connected to the battery 2 by the main feed line L1. The second power supply hub 12 is connected to the first power supply hub 11 by the main feed line L1. The third power supply hub 13 is connected to the second power supply hub 12 by the main feed line L1. The fifth power supply hub 15 is connected to the fourth power supply hub 14 by the main feed line L1. The sixth power supply hub 16 is connected to the fifth power supply hub 15 by the main feed line L1.

The first to sixth power supply hubs 11 to 16 are fed with power via the main feed lines L1. To be more specific, the first power supply hub 11 and fourth power supply hub 14 are each fed with power from the battery 2 via the main feed line L1. The second power supply hub 12 is fed with power from the battery 2 via the main feed line L1 and the first power supply hub 11. The third power supply hub 13 is fed with power from the battery 2 via the main feed line L1 and the first power supply hub 11 and second power supply hub 12. The fourth power supply hub 14 is fed with power from the battery 2 via the main feed line L1. The fifth power supply hub 15 is fed with power from the battery 2 via the main feed line L1 and the fourth power supply hub 14. The sixth power supply hub 16 is fed with power from the battery 2 via the main feed line L1 and the fourth power supply hub 14 and fifth power supply hub 15.

The first to sixth power supply hubs 11 to 16 are connected to the electronic devices D11 to D14, D21 to D25, and D31 to D33 via the sub feed lines L2 to L4. To be more specific, the first power supply hub 11 and fourth power supply hub 14 are each connected to the electronic devices D12 and D21 via the sub feed lines L2 and L3. The second power supply hub 12 is connected to the electronic devices D11, D22, D25, D31, and D33 via the sub feed lines L2 to L4. The third power supply hub 13 is connected to the electronic devices D14, D23, and D24 via the sub feed lines L2 and L3. The fifth power supply hub 15 is connected to the electronic devices D11, D13, D22, D25, D32, and D33 via the sub feed lines L2 to L4. The sixth power supply hub 16 is connected to the electronic device D23 via the sub feed line L3.

Each of the main feed lines L1 and each of the sub feed lines L2 to L4 may be an electric line capable of feeding power, and is formed of, for example, a wire harness.

The first power supply hub 11 is connected to the first ECU 21 via the sub feed line L5. The second power supply hub 12 is connected to the second ECU 22 via the sub feed line L5. The third power supply hub 13 is connected to the third ECU 23 via the sub feed line L5. The fourth power supply hub 14 is connected to the fourth ECU 24 via the sub feed line L5. The fifth power supply hub 15 is connected to the fifth ECU 25 via the sub feed line L5. The sixth power supply hub 16 is connected to the sixth ECU 26 via the sub feed line L5.

The first to sixth ECUs 21 to 26 have a function of managing and controlling the respective electronic devices D11 to D14, D21 to D25, and D31 to D33. For example, the first to sixth ECUs 21 to 26 receive detection results from various sensors (a vehicle speed sensor, a vehicle indoor temperature sensor, and the like) and use the detection results for processing in their own devices or transmit information to the central control device 3.

The central control device 3 is constituted by a microcomputer, a memory, an input/output circuit, and so forth, and controls the electronic devices D11 to D14, D21 to D25, and D31 to D33.

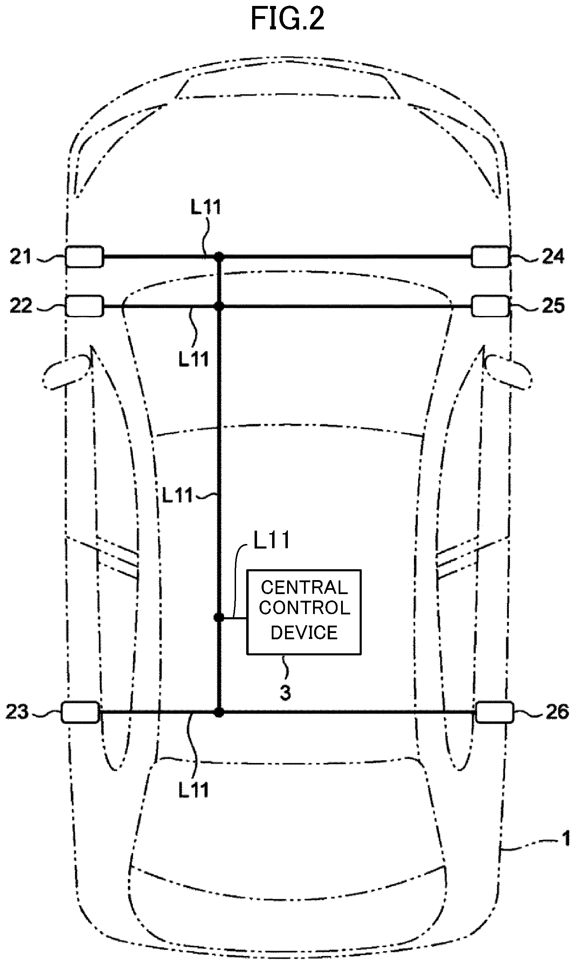

Fig. 2 is a signal system diagram of a main part of the vehicle 1.

As illustrated in Fig. 2, the first to sixth ECUs 21 to 26 are configured to receive control signals from the central control device 3 that controls the entire vehicle 1. To be more specific, the central control device 3 and the first to sixth ECUs 21 to 26 are connected to each other by communication lines L11. Thus, the control signals output from the central control device 3 are input to the first to sixth ECUs 21 to 26 via the communication lines L11. At this time, the first to sixth ECUs 21 to 26 control a relay unit 50 described below in response to control signals from the central control device 3, thereby feeding power to the electronic devices D11 to D14, D21 to D25, and D31 to D33 or cutting off the power.

As a communication scheme (communication protocol) between the central control device 3 and the first to sixth ECUs 21 to 26, for example, Controller Area Network (CAN) or CAN with Flexible Data rate (CAN-FD) is used. However, another communication scheme may be used, or a plurality of communication schemes may be used in combination.

Fig. 3 is a diagram illustrating a power supply topology of a zone in which the second power supply hub 12 is disposed (the left-front side door zone of the vehicle 1). In Fig. 3, L12 denotes a communication line connecting the relay unit 50 of the second power supply hub 12 and the second ECU 22.

As illustrated in Fig. 3, the second power supply hub 12 includes the relay unit 50 that turns ON or OFF energization of the electronic devices D11, D22, D25, D31, and D33. For example, the electronic devices D11 are keyless devices, the electronic device D22 is an electric mirror, the electronic device D25 is a car navigation device, the electronic device D31 is an air conditioner, and the electronic devices D33 are electric power windows. The relay unit 50 is electrically connected to the battery 2 via the main feed line L1. The relay unit 50 is electrically connected to the electronic devices D11, D22, D25, D31, and D33 via the sub feed lines L2, L3, and L4. The relay unit 50 includes a plurality of relays RY for individually turning ON or OFF energization of the electronic devices D11, D22, D25, D31, and D33. Each of the relays RY is turned ON or OFF in response to input of a control signal from the central control device 3. That is, power from the battery 2 is once fed to the second power supply hub 12 as is. Thereafter, the power from the battery 2 is distributed to the electronic devices D11, D22, D25, D31, and D33 via the relays RY of the second power supply hub 12. The first and third to sixth power supply hubs 11 and 13 to 16 each basically have a configuration similar to that of the second power supply hub 12.

In this way, the relays RY are accommodated inside the first to sixth power supply hubs 11 to 16. Among the first to sixth power supply hubs 11 to 16, the first power supply hub 11 and fourth power supply hub 14 include mechanical relays, and the remaining second, third, fifth, and sixth power supply hubs 12, 13, 15, and 16 do not include mechanical relays. The first power supply hub 11 and fourth power supply hub 14, which include mechanical relays, are disposed outside a space of a vehicle cabin surrounded by a water seal S and inside the body of the vehicle 1.

The first to sixth ECUs 21 to 26 control the respective relay units 50 and control ON and OFF of energization of the electronic devices D11 to D14, D21 to D25, and D31 to D33, and thus a control load of the central control device 3 can be reduced.

In the case of an electronic device to which power is fed without via the first to sixth power supply hubs 11 to 16, a mechanical relay or a semiconductor relay that turns ON or OFF energization of the electronic device may be provided separately from the power supply hubs.

Although the second power supply hub 12 includes the relays RY for individually turning ON or OFF energization of the electronic devices D11, D22, D25, D31, and D33, the second power supply hub 12 may be configured to, for example, collectively turn ON or OFF energization of the electronic devices D11 of the same type by using a single relay RY, or collectively turn ON or OFF energization of the electronic devices in the same group among specific groups of electronic devices by using a single relay RY.

In the in-vehicle power supply system having the above-described configuration, a mechanical relay is used as the relay RY for an electronic device whose current consumption (rated maximum current consumption) is higher than or equal to 10 A among the plurality of electronic devices D11 to D14, D21 to D25, and D31 to D33, whereas a semiconductor relay is used as the relay RY for an electronic device whose current consumption is lower than 10 A among the plurality of electronic devices D11 to D14, D21 to D25, and D31 to D33, and no mechanical relays are disposed in the space (including the vehicle cabin) surrounded by the water seal S (illustrated in Fig. 1). As a result, an operation sound of the mechanical relay is not transmitted to the vehicle cabin, and comfort of a user in the vehicle cabin can be increased.

Here, examples of an electronic device whose current consumption is higher than or equal to 10 A include Electronic Fuel Injection (EFI) and brake-related electronic devices. In addition, examples of an electronic device whose current consumption is lower than 10 A include light-related electronic devices and heater-related electronic devices.

With use of a mechanical relay, which is easier to replace than a semiconductor relay, for an electronic device whose current consumption is higher than or equal to 10 A, maintainability can be improved.

The in-vehicle power supply system of the above-described embodiment has a configuration in which the vehicle 1 is divided into six zones and ON and OFF of power feeding to the electronic devices D11 to D14, D21 to D25, and D31 to D33 can be controlled in each zone. The manner of division into zones and the number of zones are not limited thereto.

In the above-described embodiment, the vehicle 1 is an engine car, but may be, for example, a plug-in hybrid car, an electric car, or the like.

In the above-described embodiment, a description has been given of a case in which the electronic devices D are fed with power from the battery 2. When the engine is ON, power is fed from an alternator (not illustrated).

In the above-described embodiment, the third power supply hub 13 and the sixth power supply hub 16 are not directly electrically connected to each other by the main feed line L1, but the main feed line L1 may be provided therebetween. In other words, the third power supply hub 13 may be electrically connected to the sixth power supply hub 16 via the main feed line L1.

In the above-described embodiment, the first to sixth power supply hubs 11 to 16 are provided separately from the first to sixth ECUs 21 to 26, but may be provided integrally with the first to sixth ECUs 21 to 26. In other words, at least one of the first to sixth power supply hubs 11 to 16 may be configured to have a function similar to that of the first to sixth ECUs 21 to 26.

Although a specific embodiment of the present disclosure has been described, the present disclosure is not limited to the above-described embodiment, and various modifications can be carried out within the scope of the present disclosure. For example, contents of the above-described embodiment may be combined as appropriate to make an embodiment of the present disclosure.

### Reference Signs List

- 1: vehicle
- 2: battery
- 3: central control device
- 11: first power supply hub
- 12: second power supply hub
- 13: third power supply hub
- 14: fourth power supply hub
- 15: fifth power supply hub
- 16: sixth power supply hub
- 21: first ECU
- 22: second ECU
- 23: third ECU
- 24: fourth ECU
- 25: fifth ECU
- 26: sixth ECU
- 50: relay unit
- D11 to D14, D21 to D25, and D31 to D33: electronic device
- L1: main feed line
- L2 to L4: sub feed line
- L11: communication line
- L12: communication line
- RY: relay

## Claims

1. An in-vehicle power supply system comprising:
a plurality of power supply hubs connected to a main feed line routed from a mounted main power supply;
a plurality of electronic devices connected to the plurality of power supply hubs via a sub feed line;
a relay configured to turn ON or OFF energization of each of the electronic devices via the sub feed line; and
a control device configured to control ON and OFF of the relay to control power feeding to each of the electronic devices, wherein
each of the plurality of power supply hubs is connected to another of the plurality of power supply hubs by the main feed line,
the relay comprises a mechanical relay used for an electronic device whose current consumption is higher than or equal to 10 A among the plurality of electronic devices,
the relay comprises a semiconductor relay used for an electronic device whose current consumption is lower than 10 A among the plurality of electronic devices, and
the mechanical relay is disposed outside a space of a vehicle cabin and inside a body of a vehicle, the space of the vehicle cabin being surrounded by a water seal that blocks entry of water from an outside of the vehicle into the vehicle cabin.

2. The in-vehicle power supply system according to Claim 1, wherein
the relay is accommodated inside each of the power supply hubs, and a power supply hub including the mechanical relay among the power supply hubs is disposed outside the space of the vehicle cabin surrounded by the water seal and inside the body of the vehicle.
